# EUROPÄISCHE PATENTSCHRIFT

(11) **EP 2 992 283 B1**
(45) Veröffentlichungstag und Bekanntmachung des Hinweises auf die Patenterteilung: **13.06.2018**
(21) Anmeldenummer: 14718392.5
(22) Anmeldetag: 16.04.2014
(51) Int. Cl.: F25D 29/00, F25D 23/12, F16K 31/02, F25C 5/00

(54) **KÄLTEGERÄT MIT EINEM WASSERANSCHLUSS**
REFRIGERATION APPLIANCE COMPRISING A WATER SUPPLY CONNECTION
APPAREIL DE FROID MUNI D'UN RACCORDEMENT D'EAU

(30) Priorität: 30.04.2013 DE 102013207956
(43) Veröffentlichungstag der Anmeldung: 09.03.2016
(73) Patentinhaber: BSH Hausgeräte GmbH, 81739 München (DE)
(72) Erfinder: FÄHNLE, Elmar, 89275 Elchingen (DE); GAPLIKOW, Eugen, 89312 Günzburg (DE); KELLER, Hans Gerd, 89537 Giengen (DE); KRAPP, Michael, 89564 Nattheim (DE); LAIBLE, Karl-Friedrich, 89129 Langenau (DE); RIMKEVICH, Vitaliy, 89537 Giengen (DE); WERNER, Hans Peter, 89537 Giengen (DE)
(86) Internationale Anmeldenummer: PCT/EP2014/057751
(87) Internationale Veröffentlichungsnummer: WO 2014/177383

(56) Entgegenhaltungen:
- EP-A1- 1 624 266
- DE-A1-102006 002 445
- DE-T5-112006 000 552

## Beschreibung

Die vorliegende Erfindung betrifft ein Kältegerät mit einer Zulaufleitung zum Anschließen des Kältegerätes an einen Wasseranschluss und einem steuerbaren Sicherheitsventil in der Zulaufleitung des Kältegerätes zum Absperren des Wasseranschlusses.

Die Druckschrift DE 11 2006 000 552 T5 beschreibt eine Kühlvorrichtung mit einem Flüssigkeitsversorgungssystem für eine Benutzervorrichtung mit einem Schutzsystem, um von einem möglichen Auslaufen von Flüssigkeit herrührendes Überlaufen zu verhindern.

Die Druckschrift EP 1 624 266 A1 offenbart ein Kältegerät mit einem Hydraulikkreislauf, umfassend eine Wasserverteilung und Anschluss an die öffentliche Wasserversorgung. Die Vorrichtung umfasst ein erstes Magnetventil und zweites Magnetventil in dem Wasserkreislauf und ein elektronisches Steuersystem. Das elektronische Steuersystem ist geeignet, die Magnetventile zu betätigen, um den Wasserfluss in der Schaltung und den Wasserfluss in dem Verteiler zu steuern, sowie die Wassermenge zu bestimmen.

Die Druckschrift DE 10 2006 002 445 A1 offenbart einen Flüssigkeitstank, der in einem Kühlschrank verbaut ist. Der Flüssigkeitstank ist zur Aufbewahrung und Kühlung von Flüssigkeit vorgesehen. Über einen Spenderabschnitt wird die gekühlte Flüssigkeit abgegeben. Der Spenderabschnitt umfasst ein Endstück, das einen Endbereich des Reservoirabschnittes überstehend umgibt und ein Rückschlagventil umfasst, dass an den Reservoirabschnitt angrenzend in das Endstück eingesteckt ist.

Es ist die der Erfindung zugrundeliegende Aufgabe, ein Kältegerät mit wasserführenden Komponenten anzugeben, bei dem das Kältegerät und seine Umgebung weitergehend vor möglichen Folgen eines Wasserlecks geschützt sind.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Kältegerät mit einer Zulaufleitung zum Anschließen des Kältegerätes an einen Wasseranschluss und einem steuerbaren Sicherheitsventil in der Zulaufleitung des Kältegerätes zum Absperren des Wasseranschlusses gelöst, das eine Leckerfassungseinrichtung zum Erfassen eines Lecks innerhalb eines Wasserkreislaufes umfasst, die einen Mikroschalter zum Unterbrechen einer Stromzufuhr zu dem Sicherheitsventil bei einem erfassten Leck umfasst. Dadurch wird beispielsweise der technische Vorteil erreicht, dass bei Auftreten eines Lecks ein Stromkreis unterbrochen wird und ein Kurzschluss verhindert wird.

Unter einem Kältegerät wird insbesondere ein Haushaltskältegerät verstanden, also ein Kältegerät, das zur Haushaltsführung in Haushalten oder im Gastronomiebereich eingesetzt wird, und insbesondere dazu dient, Lebensmittel und/oder Getränke bei bestimmten Temperaturen zu lagern, wie beispielsweise ein Kühlschrank, ein Gefrierschrank, eine Kühlgefrierkombination, eine Gefriertruhe oder ein Weinkühlschrank. Erfindungsgemäß umfasst das Kältegerät ein steuerbares Funktionsventil zum Ausgeben von Wasser aus dem Wasserkreislauf. Dadurch wird beispielsweise der technische Vorteil erreicht, dass der Wasserkreislauf redundant von zwei unabhängigen Ventilen gesperrt werden kann. Erfindungsgemäß ist das Kältegerät ausgebildet, eine Stromzufuhr zu dem Funktionsventil bei einem erfassten Leck zu unterbrechen. Dadurch wird beispielsweise der technische Vorteil erreicht, dass zusätzlich zum Absperren eines Wasseranschluss des Kältegerätes auch die Ausgabe von Wasser an eine Ausgabeeinrichtung gesperrt ist.

Weiterhin umfasst das erfindungsgemäße Kältegerät ein Ventilgehäuse, in dem das Funktionsventil und die Leckerfassungseinrichtung angeordnet sind. Dadurch wird beispielsweise der technische Vorteil erreicht, dass ein ungewolltes Austreten von Wasser aus dem Funktionsventil erfasst wird.

Erfindungsgemäß ist das Funktionsventil des Kältegerätes ausgebildet, bei einem Unterbrechen einer Stromzufuhr das Ausgeben von Wasser zu sperren. Dadurch wird beispielsweise der technische Vorteil erreicht, dass die Ausgabe von Wasser blockiert wird, sobald die Stromzufuhr durch den Mikroschalter oder einen anderen Fehler, wie beispielsweise ein Kabelbruch, unterbrochen wird.

Erfindungsgemäß ist das Sicherheitsventil des Kältegerätes ausgebildet, bei einem Unterbrechen einer Stromzufuhr den Wasseranschluss abzusperren. Dadurch wird beispielsweise ebenfalls der technische Vorteil erreicht, dass der Wasseranschluss des Kältegerätes blockiert wird, sobald die Stromzufuhr durch den Mikroschalter oder einen anderen Fehler, wie beispielsweise ein Kabelbruch, unterbrochen wird.

In einer weiteren vorteilhaften Ausführungsform des Kältegerätes ist in dem Wasserkreislauf zwischen dem Sicherheitsventil und dem Funktionsventil ein Rückschlagventil angeordnet. Dadurch wird beispielsweise ebenfalls der technische Vorteil erreicht, dass ein ungewolltes Austreten von Wasser aus dem Kältegerät verhindert wird.

In einer weiteren vorteilhaften Ausführungsform des Kältegerätes ist das Funktionsventil in einem Zulaufschlauch hinter dem Sicherheitsventil integriert. Dadurch wird beispielsweise der technische Vorteil erreicht, dass sich der Aufbau des Kältegerätes vereinfacht.

In einer weiteren vorteilhaften Ausführungsform des Kältegerätes umfasst die Leckerfassungseinrichtung eine Auffangwanne zum Auffangen von Leckwasser. Dadurch wird beispielsweise der technische Vorteil erreicht, dass ein Austreten von Leckwasser aus dem Kältegerät verhindert wird.

In einer weiteren vorteilhaften Ausführungsform des Kältegerätes umfasst die Leckerfassungseinrichtung einen Schwimmer zum Erfassen des Leckwasserpegels in der Auffangwanne. Dadurch wird beispielsweise der technische Vorteil erreicht, dass der Leckwasserpegel auf einfache und zuverlässige Weise erfasst wird.

In einer weiteren vorteilhaften Ausführungsform des Kältegerätes ist der Schwimmer über einen Hebel mit dem Mikroschalter verbunden. Dadurch wird beispielsweise der technische Vorteil erreicht, dass der Schwimmer und der Mikroschalter getrennt voneinander angeordnet sind und der Mikroschalter vor Feuchtigkeit geschützt ist

In einer weiteren vorteilhaften Ausführungsform des Kältegerätes ist zwischen dem Sicherheitsventil und dem Wasseranschluss ein Rückschlagventil angeordnet. Dadurch wird beispielsweise der technische Vorteil erreicht, dass ein ungewolltes Zurückfließen von Wasser aus dem Kältegerät, beispielsweise bei einem Trennen des Kältegerätes von der Wasserversorgung, verhindert wird.

In einer weiteren vorteilhaften Ausführungsform des Kältegerätes umfasst das Kältegerät eine Steuereinrichtung zum Steuern des Sicherheitsventils und/oder des Funktionsventils. Beispielsweise umfasst die Steuereinrichtung einen Mikroprozessor. Dadurch wird beispielsweise der technische Vorteil erreicht, dass die Steuereinrichtung das Sicherheitsventil und das Funktionsventil in flexibler Art und Weise in Abhängigkeit unterschiedlicher Parameter steuern kann

In einer weiteren vorteilhaften Ausführungsform des Kältegerätes umfasst das Kältegerät einen Alarmgeber zum Ausgeben eines Alarms bei einem erfassten Leck. Dadurch wird beispielsweise der technische Vorteil erreicht, dass ein Benutzer bei einem unbeabsichtigten Austreten von Wasser gewarnt wird und Gegenmaßnahmen einleiten kann.

In einer weiteren vorteilhaften Ausführungsform des Kältegerätes umfasst das Ventilgehäuse einen Steckanschluss zur Versorgung der Leckerfassungseinrichtung mit elektrischer Energie. Dadurch wird beispielsweise der technische Vorteil erreicht, dass das Ventilgehäuse bei einer Montage des Kältegerätes auf einfache Weise mit einer elektrischen Energieversorgung verbunden werden kann.

Ausführungsbeispiele der Erfindung sind in den Zeichnungen dargestellt und werden im Folgenden näher beschrieben.

Es zeigen:
- Fig. 1: eine schematische Ansicht eines Kältegerätes;
- Fig. 2: ein Kältegerät mit Wasserführung; und
- Fig. 3: einen Aufbau eines Ventilgehäuses und weitere Funktionskomponenten.

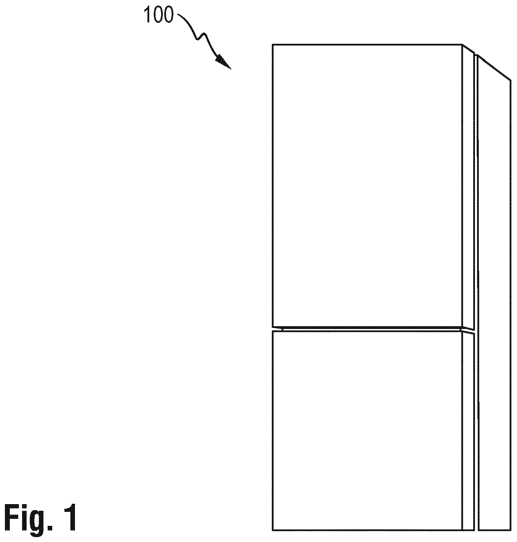

Fig.1 zeigt einen Kühlschrank stellvertretend für ein allgemeines Kältegerät 100. Der Kühlschrank dient beispielsweise zur Kühlung von Lebensmitteln und umfasst einen Kältemittelkreislauf mit einem Verdampfer, einem Verdichter, einem Verflüssiger und einem Drosselorgan. Der Verdampfer ist ein Wärmeaustauscher, in dem nach der Expansion das flüssige Kältemittel durch Wärmeaufnahme von dem zu kühlenden Medium, d.h. der Luft im Inneren des Kühlschranks, verdampft wird.

Der Verdichter ist ein mechanisch betriebenes Bauteil, das Kältemitteldampf vom Verdampfer absaugt und bei einem höheren Druck zum Verflüssiger ausstößt. Der Verflüssiger ist ein Wärmeaustauscher, in dem nach der Kompression das verdampfte Kältemittel durch Wärmeabgabe an ein äußeres Kühlmedium, d.h. die Umgebungsluft, verflüssigt wird. Das Drosselorgan ist eine Vorrichtung zur ständigen Verminderung des Druckes durch Querschnittsverengung.

Das Kältemittel ist ein Fluid, das für die Wärmeübertragung in dem kälteerzeugenden System verwendet wird, das bei niedrigen Temperaturen und niedrigem Druck des Fluids Wärme aufnimmt und bei höherer Temperatur und höherem Druck des Fluids Wärme abgibt, wobei üblicherweise Zustandsänderungen des Fluids inbegriffen sind.

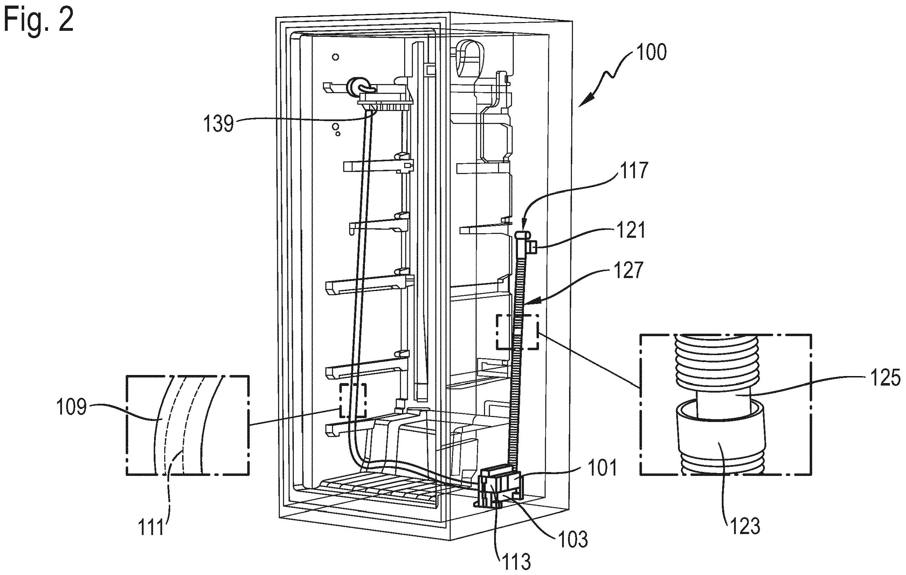

Fig. 2 zeigt eine Wasserführung im Kältegerät 100 von der Gerätefront aus gesehen. Das Kältegerät 100 ist an eine externe Wasserversorgung angeschlossen und ist mit einer automatischen Eis- und/oder Wasserausgabe mit entsprechenden wasserführenden Komponenten ausgestattet. Das Kältegerät 100 ist an einen externen Wasseranschluss 117 durch einen Zulaufschlauch 127 angeschlossen, der eine Zulaufleitung von dem Wasseranschluss 117 bildet. Der Zulaufschlauch 127 umfasst ein elektrisches Sicherheitsventil 121, das direkt am Wasseranschluss 117 angeordnet ist und vom Kältegerät 100 angesteuert wird. Das Sicherheitsventil 121 befindet sich am Anfang des Zulaufschlauches 127.

Das Sicherheitsventil 121 dient als ein Wasserventil im Wasserkreislauf des Kältegerätes 100 und sperrt den Leitungsdruck an dem externen Wasseranschluss 117 ab, sodass der nachfolgende Wasserkreislauf im Inneren des Kältegerätes 100 drucklos geschaltet wird.

Der Zulaufschlauch 127 weist einen Innenschlauch 125 auf, der das Wasser von dem Wasseranschluss 117 zum Kältegerät 100 führt und einen Außenschlauch 123, der den Innenschlauch 125 umgibt und das mögliche Leckwasser von dem Innenschlauch 125 oder dem Sicherheitsventil 121 und deren Verbindungsstellen zu einer Auffangwanne 103 führt. Der Zulaufschlauch 127 ist mit einem Ventilgehäuse 113 verbunden, das im Inneren des Kältegerätes 100 angeordnet ist und eine Leckerfassungseinrichtung 101 umfasst. Aus dem Funktionsventil und dem Ventilgehäuse 113 führt eine Wasserleitung 111 zu einem automatischen Eisbereiter 139 und/oder zu einer anderen Wasserausgabe.

In dem Ventilgehäuse 113 ist die Auffangwanne 103 für das Leckwasser integriert. Das Ventilgehäuse 113 dient gleichzeitig als ein Aufnahmegehäuse für ein Funktionsventil und für die Komponenten, die für die Leckerfassung zuständig sind. Leckstellen im Inneren des Kältegerätes 100 können insbesondere an Verbindungsstellen oder Anschlusspunkten von unterschiedlichen wasserführenden Komponenten auftreten.

Die elastische Wasserleitung 111 wird durch ein Leerrohr 109 zur Schlauchführung geführt, das im Isolationsschaum des Kältegerätes 100 verlegt ist. Das Leerrohr 109 dient der einfachen Schlauchverlegung. Darüber hinaus dient das Leerrohr 109 zur Abführung des Leckwassers, welches im Verlauf der Wasserleitung 111 und deren Verbindungsstelle zu weiteren Komponenten auftreten kann. Zu diesem Zweck sind die Leerrohre 109 so mit dem Ventilgehäuse 113 verbunden, dass das Leckwasser in die Auffangwanne 103 im Inneren des Ventilgehäuses 113 geleitet wird. Insbesondere können die Anschlussstellen und Übergänge unterschiedlicher wasserführender Komponenten durch umgebende Leerrohre 109 vor einem Wasseraustritt geschützt sein.

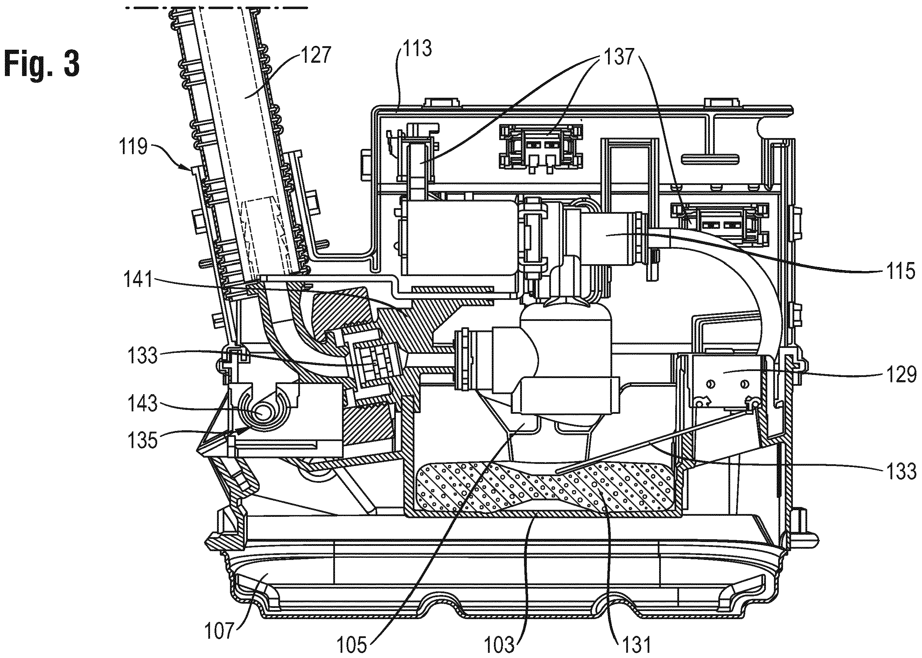

Fig. 3 zeigt einen Aufbau des Ventilgehäuses 113 und weitere Funktionskomponenten. Das Kältegerät 100 umfasst das Sicherheitsventil 121 am Wasseranschluss 117 und das Funktionsventil 115 im Inneren des Kältegerätes 100. Das Funktionsventil 115 ermöglicht einen geregelten Wasserdurchfluss zur Ausgabe von Wasser aus dem Wasserkreislauf. Das Sicherheitsventil 115 ist ein Ventil ohne eine Durchflussregelung zum vollständigen Freigeben oder Sperren der Wasserzuführung.

Das Sicherheitsventil 121 und das Funktionsventil 115 sind in Reihe geschaltet. Das Funktionsventil 115 ist in Richtung des Wasserflusses im Wasserkreislauf nach dem Sicherheitsventil 121 angeordnet. Selbst falls eines der beiden Ventile eine Wasserzufuhr aufgrund einer Fehlfunktion nicht mehr schließen können sollte, kann in diesem Fall die Wasserzufuhr von dem anderen der beiden Ventile geschlossen werden. Auch bei einem temporär tropfenden Ventil kann daher die Wasserzufuhr vollständig geschlossen werden.

Sowohl das Sicherheitsventil 121 als auch das Funktionsventil 115 können von einer Steuereinrichtung elektrisch geschaltet werden. Durch die elektronische Ansteuerung der Ventile ist sowohl ein gleichzeitiges als auch ein zeitversetztes Ein- und Ausschalten der Ventile möglich.

Die wasserführenden Komponenten und deren Wasseranschlüsse sind in dem Ventilgehäuse 113 derart angeordnet, dass möglicherweise auftretendes Leckwasser in der Auffangwanne 103 gesammelt wird. Die Auffangwanne 103 weist einen Überlauf 105 für gesammeltes Leckwasser auf. Der Überlauf 105 dient zum einen dazu, die elektrischen Komponenten vor steigendem Leckwasser zu schützen und zum anderen der Abführung des überschüssigen Leckwassers.

Um dieses überschüssige Leckwasser aufzufangen, ist die Auffangwanne 103 oberhalb von einer Verdunstungsschale 107 angeordnet. Der eigentliche Zweck der Verdunstungsschale 107 liegt im Auffangen von Abtauwasser aus dem Kältegerät 100. Durch die Anordnung der Auffangwanne 103 über der Verdunstungsschale 107 entsteht ein zusätzliches Auffangvolumen für das Leckwasser, so dass das Ventilgehäuse 113 selbst möglichst kompakt ausgeführt werden kann.

Das Leckwasser wird zur Auffangwanne 103 als Teil der Leckerfassungseinrichtung 101 geführt. Dort ist ein Schwimmer 131 angeordnet, der durch das steigende Leckwasser aufschwimmt und über einen Schalterhebel 133 einen Mikroschalter 129 betätigt. Die Auffangwanne 103 im Inneren des Ventilgehäuses 113 weist ein geringes Auffangvolumen für Leckwasser auf. Zur Betätigung des Mikroschalters 129 mittels des Schwimmers 131 im Falle eines Lecks ist daher lediglich ein geringes Wasservolumen erforderlich. Dadurch wird der Vorteil erreicht, dass bereits bei geringen Mengen an austretendem Wasser ein Leck zuverlässig erfasst werden kann. Strömt weiteres Wasser aus dem Leck aus, wird dieses über den Überlauf 105 kontrolliert an die Verdunstungsschale 107 mit einem größeren Auffangvolumen weitergeleitet. Die Auffangwanne 103 ist oberhalb der Verdunstungsschale 107 angeordnet, so dass Wasser aufgrund der Schwerkraft in die Verdunstungsschale vom Überlauf 105 in die Verdunstungsschale 107 fließt. Zu diesem Zweck kann der Überlauf 105 mit der Verdunstungsschale 107 mittels eines Schlauches verbunden sein.

Dadurch wird sowohl eine Erfassung des Lecks durch geringe Mengen an Leckwasser als auch ein Austritt des Leckwassers verhindert. Zudem kann aufgrund des geringen Auffangvolumens der Auffangwanne 103 das Ventilgehäuse 117 in einer kompakten Bauform hergestellt werden.

Der Mikroschalter 129 ist so in den Stromkreis des Sicherheitsventils 121 eingebunden, dass er die Stromzufuhr zum Sicherheitsventil 121 unterbricht. Die Stromzufuhr ist beispielsweise durch eine Stromnetzversorgung bereitgestellt. Dadurch ist gewährleistet, dass im Falle einer Leckage das Sicherheitsventil 121 mechanisch von Stromzuführung getrennt ist. Stromleitungen und die Leitungsverbinder im Inneren des Kältegerätes 100 sind räumlich so angeordnet, dass diese nicht mit Wasser in Kontakt kommen können. Dazu sind wasserführende Komponenten und mögliche Leckstellen unterhalb der elektrischen Stromleitungen und Stecker angeordnet.

Dadurch wird das Sicherheitsventil 121 bei einem Leck geschlossen und der Wasserfluss zum Kältegerät 100 wird an der Anschlussstelle zur Wasserversorgung unterbrochen. Der betätigte Mikroschalter 129 gibt ein Signal an eine Steuereinrichtung aus, so dass eine Stromzufuhr zu dem Funktionsventil 115 über die Steuereinrichtung ebenfalls unterbrochen wird. Bei unterbrochener Stromzufuhr befinden sich sowohl das Funktionsventil 115 als auch das Sicherheitsventil 121 im geschlossenen Zustand. Wird die Stromzufuhr unterbrochen, schließen sich die Ventile demnach automatisch. Die direkte Unterbrechung der Stromzuführung bietet mechanisch eine maximale Abschaltsicherheit.
Wird ein Wasserleck von der Leckerfassungseinrichtung 101 mit dem Mikroschalter 129 erfasst, wird ein sichtbarer oder hörbarer Alarm am Bedienteil des Kältegerätes 100 ausgegeben.

Zudem ist in dem Ventilgehäuse 113 ein Rückschlagventil 133 zwischen dem Sicherheitsventil 121 und dem Funktionsventil 115 eingebaut. Das Rückschlagventil 133 verhindert ein unkontrolliertes Ausströmen von Wasser aus dem Wasserkreislauf des Kältegerätes, beispielsweise wenn das Kältegerät 100 bei einer Demontage von einer externen Wasserversorgung getrennt wird. Daneben verhindert das Rückschlagventil 133, dass das im Kältegerät 100 befindliche Wasser zurück in die Hauswasserleitung fließt. Durch die Verwendung des Rückschlagventils 133 im Inneren des Wasserkreislaufs kann dies auf eine besonders sichere und platzsparende Weise erreicht werden. Im Gegensatz zu anderen Haushaltsgeräten, wie beispielsweise Geschirrspülern, die eine freie Fließstrecke verwenden, ist die Verwendung des Rückschlageventils 133 im Wasserkreislauf des Kältegerätes 100 problemlos möglich, da das Wasser im Wasserkreislauf des Kältegerätes 100 keine Schmutzreste mit sich führt und eine hohe Wasserqualität aufweist.

Die Verlegung von Wasserleitungen 111 im Kältegerät 100 erfolgt über die Leerrohre 109, in denen Schläuche geführt sind. Diese Leerrohre 109 werden zur Leitung des Leckwassers von den wasserführenden Komponenten zu der Auffangwanne 103 verwendet. Zu diesem Zweck weist das Ventilgehäuse 113 einen Leerrohranschluss 135 mit einem Schlauchausgang 143 auf. Der Zulaufschlauch 127 von dem Sicherheitsventil 121 ist an einem Anschluss 119 mit einem Schlaucheingang mit dem Ventilgehäuse 113 verbunden.

Die Auffangwanne 103 weist den Überlauf 105 auf, der direkt über einer Verdunstungsschale 107 liegt. Das Funktionsventil 115 ist mechanisch über ein Verbindungsteil 141 mit dem Rückschlagventil 133 gekoppelt. Zusätzlich weist das Ventilgehäuse 113 mehrere Steckanschlüsse 137 zur Versorgung der Leckerfassungseinrichtung mit elektrischer Energie auf. Die Steckanschlüsse 137 dienen der Zuführung von elektrischer Energie oder zur Übermittlung von Steuersignalen. Ein erster Steckanschluss 137 ist beispielsweise zur Energieversorgung des Funktionsventils 115 vorgesehen, ein zweiter Steckanschluss 137 ist beispielsweise zur Übermittlung von elektrischen Signalen von dem Mikroschalter 129 vorgesehen und ein dritter Steckanschluss 137 ist zum Anschließen einer Steuerleitung für das Sicherheitsventil 121 vorgesehen.

In weiteren Ausführungsformen kann das Rückschlagventil 133 zwischen dem Sicherheitsventil 121 und dem Wasseranschluss 117 positioniert sein. Der Zulaufschlauch 127 kann ohne ein Verbindungsstück direkt an dem Sicherheitsventil 121 angeschlossen sein. Das Funktionsventil 115 kann direkt hinter dem Sicherheitsventil 121 im Zulaufschlauch 127 integriert sein.

Das erläuterte System kann in allen Kältegeräten eingesetzt werden, wie beispielsweise Kühl-, Gefrier- oder Kombigeräte. Durch das System wird eine Verhinderung von Schäden durch Leckwasser aus wasserführenden Komponenten und deren Verbindungsstellen erreicht. Eine direkte Anordnung des Sicherheitsventils 121 am Wasseranschluss 117 ermöglicht ein druckloses Wassersystem im Inneren des Kältegerätes 100, wenn kein Wasser vom Kältegerät 100 angefordert wird. Durch eine Kombination aus Sicherheitsventil 121 und Funktionsventil 115 wird eine erhöhte Funktionssicherheit des Wasserkreislaufes erreicht. Die Leerrohre 109 im Isolationsschaum des Kältegerätes 100 dienen nicht nur der Führung von Wasserleitungen und Schläuchen, sondern auch zur Abführung von Leckwasser. Das Sicherheitsventil 121 und/oder das Funktionsventil 115 können durch ein Magnetventil gebildet sein.

Durch den Überlauf 105 für Leckwasser aus der Auffangwanne 103 in die Verdunstungsschale 107 kann das Ventilgehäuse 113 in kompakter Weise realisiert werden. Die Verdunstungsschale 107 kann einen Teil des Ventilgehäuses 113 bilden. Daneben kann die Verdunstungsschale 107 aus einem thermisch leitfähigen Material wie Metall oder Blech gebildet sein, so dass sich die Übertragung von Wärme auf die Verdunstungsschale 107 verbessert und die Verdunstung erhöht wird.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kältegerät
- 101: Leckerfassungseinrichtung
- 103: Auffangwanne
- 105: Überlauf
- 107: Verdunstungsschale
- 109: Leerrohr
- 111: Wasserleitung
- 113: Ventilgehäuse
- 115: Funktionsventil
- 117: Wasseranschluss
- 119: Anschluss
- 121: Sicherheitsventil
- 123: Außenschlauch
- 125: Innenschlauch
- 127: Zulaufschlauch/Zulaufleitung
- 129: Mikroschalter
- 131: Schwimmer
- 133: Rückschlagventil
- 135: Leerrohranschluss
- 137: Steckanschluss
- 139: Eisbereiter
- 141: Verbindungsteil
- 143: Schlauchausgang

## Patentansprüche

1. Kältegerät (100) mit einer Zulaufleitung (127) zum Anschließen des Kältegerätes (100) an einen Wasseranschluss (117) und einem steuerbaren Sicherheitsventil (121) in der Zulaufleitung (127) des Kältegerätes (100) zum Absperren des Wasseranschlusses (117), wobei das Kältegerät (100) eine Leckerfassungseinrichtung (101) zum Erfassen eines Lecks innerhalb eines dem Sicherheitsventil (121) nachfolgenden Wasserkreislaufes im Inneren des Kältegerätes (100) umfasst, die einen Mikroschalter (129) zum Unterbrechen einer Stromzufuhr zu dem Sicherheitsventil (121) bei einem erfassten Leck umfasst, wobei das Sicherheitsventil (121) ausgebildet ist, bei einem Unterbrechen einer Stromzufuhr den Wasseranschluss abzusperren, und wobei das Kältegerät (100) ein steuerbares Funktionsventil (115) zum Ausgeben von Wasser aus dem Wasserkreislauf umfasst, **dadurch gekennzeichnet, dass** das Kältegerät (100) ausgebildet ist, eine Stromzufuhr zu dem Funktionsventil (115) bei einem erfassten Leck zu unterbrechen und wobei das Funktionsventil (115) ausgebildet ist, bei einem Unterbrechen einer Stromzufuhr das Ausgeben von Wasser zu sperren, und wobei das Kältegerät (100) ein Ventilgehäuse (113) umfasst, in dem das Funktionsventil (115) und die Leckerfassungseinrichtung (101) angeordnet sind.

2. Kältegerät (100) nach einem der vorangehenden Ansprüche, **dadurch gekennzeichnet, dass** in dem Wasserkreislauf zwischen dem Sicherheitsventil (121) und dem Funktionsventil (115) ein Rückschlagventil (133) angeordnet ist.

3. Kältegerät (100) nach einem der vorangehenden Ansprüche, **dadurch gekennzeichnet, dass** das Funktionsventil (115) in einem Zulaufschlauch (127) hinter dem Sicherheitsventil (121) integriert ist.

4. Kältegerät (100) nach einem der vorangehenden Ansprüche, **dadurch gekennzeichnet, dass** die Leckerfassungseinrichtung (101) eine Auffangwanne (103) zum Auffangen von Leckwasser umfasst.

5. Kältegerät (100) nach einem der vorangehenden Ansprüche, **dadurch gekennzeichnet, dass** die Leckerfassungseinrichtung (101) einen Schwimmer (131) zum Erfassen des Leckwasserpegels in der Auffangwanne (103) umfasst.

6. Kältegerät (100) nach einem der vorangehenden Ansprüche, **dadurch gekennzeichnet, dass** der Schwimmer (131) über einen Schalterhebel (133) mit dem Mikroschalter (129) verbunden ist.

7. Kältegerät (100) nach einem der vorangehenden Ansprüche, **dadurch gekennzeichnet, dass** zwischen dem Sicherheitsventil (121) und dem Wasseranschluss ein Rückschlagventil angeordnet ist.

8. Kältegerät (100) nach einem der vorangehenden Ansprüche, **dadurch gekennzeichnet, dass** das Kältegerät (100) eine Steuereinrichtung zum Steuern des Sicherheitsventils (121) und/oder des Funktionsventils (115) umfasst.

9. Kältegerät (100) nach einem der vorangehenden Ansprüche, **dadurch gekennzeichnet, dass** das Kältegerät (100) einen Alarmgeber zum Ausgeben eines Alarms bei einem erfassten Leck umfasst.

10. Kältegerät (100) nach einem der vorangehenden Ansprüche, **dadurch gekennzeichnet, dass** das Ventilgehäuse (113) einen Steckanschluss (137) zur Versorgung der Leckerfassungseinrichtung (101) mit elektrischer Energie umfasst.

## Claims

1. Refrigeration appliance (100) having a supply pipe (127) for connecting the refrigeration appliance (100) to a water supply connection (117) and a controllable safety valve (121) in the supply pipe (127) of the refrigeration appliance (100) for shutting off the water supply connection (117), wherein the refrigeration appliance (100) comprises a leak detection device (101) for detecting a leak within a water circuit in the interior of the refrigeration appliance (100), downstream of the safety valve (121), which has a micro-switch (129) for interrupting a current supply to the safety valve (121) when a leak is detected, wherein the safety valve (121) is embodied to shut off the water supply connection if a current supply is interrupted, and wherein the refrigeration appliance (100) comprises a controllable function valve (115) for outputting water from the water circuit, **characterised in that** the refrigeration appliance (100) is embodied to interrupt a current supply to the function valve (115) when a leak is detected, and wherein the function valve (115) is embodied to shut off the output of water if a current supply is interrupted, and wherein the refrigeration appliance (100) has a valve housing (113), in which the function valve (115) and the leak detection device (101) are arranged.

2. Refrigeration appliance (100) according to one of the preceding claims, **characterised in that** a non-return valve (133) is arranged in the water circuit between the safety valve (121) and the function valve (115).

3. Refrigeration appliance (100) according to one of the preceding claims, **characterised in that** the function valve (115) is integrated in a supply pipe (127) behind the safety valve (121).

4. Refrigeration appliance (100) according to one of the preceding claims, **characterised in that** the leak detection device (101) comprises a collection trough (103) for collecting leakage water.

5. Refrigeration appliance (100) according to one of the preceding claims, **characterised in that** the leak detection device (101) comprises a float (131) for detecting the leakage water level in the collection trough (103).

6. Refrigeration appliance (100) according to one of the preceding claims, **characterised in that** the float (131) is connected to the micro-switch (129) by way of a switch lever (133).

7. Refrigeration appliance (100) according to one of the preceding claims, **characterised in that** a non-return valve is arranged between the safety valve (121) and the water supply connection.

8. Refrigeration appliance (100) according to one of the preceding claims, **characterised in that** the refrigeration appliance (100) comprises a control facility for controlling the safety valve (121) and/or the function valve (115).

9. Refrigeration appliance (100) according to one of the preceding claims, **characterised in that** the refrigeration appliance (100) comprises an alarm sensor for outputting an alarm when a leak is detected.

10. Refrigeration appliance (100) according to one of the preceding claims, **characterised in that** the valve housing (113) comprises a plug-in connection (137) for supplying the leak detection device (101) with electrical energy.

## Revendications

1. Appareil de froid (100) doté d'une conduite d'alimentation (127) pour raccorder l'appareil de froid (100) à un raccordement d'eau (117) et d'une soupape de sécurité (121) commandable placée dans la conduite d'alimentation (127) de l'appareil de froid (100) pour fermer le raccordement d'eau (117), l'appareil de froid (100) comprenant un dispositif de détection de fuite (101) servant à détecter une fuite à l'intérieur d'un circuit d'eau en aval de la soupape de sécurité (121), ledit dispositif comprenant un microrupteur (129) pour interrompre l'alimentation électrique de la soupape de sécurité (121) en cas de détection de fuite, la soupape de sécurité (121) étant conçue pour fermer le raccordement d'eau en cas d'interruption d'alimentation électrique, et l'appareil de froid (100) comprenant une soupape fonctionnelle (115) servant à distribuer de l'eau du circuit d'eau, **caractérisé en ce que** l'appareil de froid (100) est conçu pour interrompre l'alimentation électrique de la soupape fonctionnelle (115) en cas de détection de fuite, et la soupape fonctionnelle (115) étant conçue pour empêcher la distribution d'eau en cas d'interruption d'alimentation électrique, et l'appareil de froid (100) comprenant un boîtier de soupape (113) dans lequel sont placés la soupape fonctionnelle (115) et le dispositif de détection de fuite (101).

2. Appareil de froid (100) selon l'une des revendications précédentes, **caractérisé en ce qu'**un clapet de non-retour (133) est placé dans le circuit d'eau entre la soupape de sécurité (121) et la soupape fonctionnelle (115).

3. Appareil de froid (100) selon l'une des revendications précédentes, **caractérisé en ce que** la soupape fonctionnelle (115) est intégrée dans un tuyau d'alimentation (127) derrière la soupape de sécurité (121).

4. Appareil de froid (100) selon l'une des revendications précédentes, **caractérisé en ce que** le dispositif de détection de fuite (101) comprend un bac collecteur (103) pour recueillir l'eau de fuite.

5. Appareil de froid (100) selon l'une des revendications précédentes, **caractérisé en ce que** le dispositif de détection de fuite (101) comprend un flotteur (131) pour détecter le niveau d'eau de fuite dans le bac collecteur (103).

6. Appareil de froid (100) selon l'une des revendications précédentes, **caractérisé en ce que** le flotteur (131) est relié au microrupteur (129) par un levier de microrupteur (133).

7. Appareil de froid (100) selon l'une des revendications précédentes, **caractérisé en ce qu'**un clapet de non-retour est placé entre la soupape de sécurité (121) et le raccordement d'eau.

8. Appareil de froid (100) selon l'une des revendications précédentes, **caractérisé en ce que** l'appareil de froid (100) comprend un dispositif de commande pour commander la soupape de sécurité (121) et/ou la soupape fonctionnelle (115).

9. Appareil de froid (100) selon l'une des revendications précédentes, **caractérisé en ce que** l'appareil de froid (100) comprend un émetteur d'alarme pour émettre une alarme en cas de détection de fuite.

10. Appareil de froid (100) selon l'une des revendications précédentes, **caractérisé en ce que** le boîtier de soupape (113) comprend une connexion à fiche (137) pour alimenter le dispositif de détection de fuite (101) en énergie électrique.
